(19) Europäisches Patentamt
European Patent Office
Office européen des brevets

(11) Veröffentlichungsnummer : **0 456 605 A1**

(12) **EUROPÄISCHE PATENTANMELDUNG**

(21) Anmeldenummer : **91810326.8**

(22) Anmeldetag : **29.04.91**

(51) Int. Cl.[5] : **C07F 9/6571**, C08K 5/5398, C08K 5/523, C08K 5/527, C07F 9/6574, C07F 9/12, C07F 9/165

(30) Priorität : **09.05.90 CH 1570/90**

(43) Veröffentlichungstag der Anmeldung : **13.11.91 Patentblatt 91/46**

(84) Benannte Vertragsstaaten : **CH DE FR GB IT LI NL SE**

(71) Anmelder : **CIBA-GEIGY AG**
**Klybeckstrasse 141**
**CH-4002 Basel (CH)**

(72) Erfinder : **Flury, Peter, Dr.**
**Muldenweg 4204**
**Himmelried (CH)**
Erfinder : **Scharf, Wolfgang, Dr.**
**Röttler Ring 11c**
**W-7889 Grenzach-Wyhlen (DE)**

(54) **Phosphorverbindungen.**

(57) Verbindungen der allgemeinen Formeln I

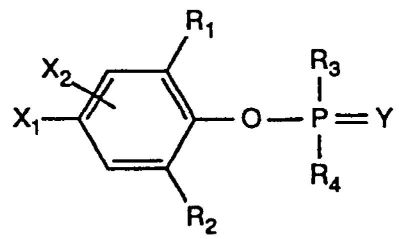

(I),

worin $X_1$ Chlor oder Brom bedeutet,
$X_2$ Chlor, Brom oder Wasserstoff ist, und
Y für O oder S, und
$R_1$ und $R_2$ unabhängig voneinander $C_1$-$C_4$ -Alkyl bedeuten, und
$R_3$ und $R_4$ eine gleich oder verschieden substituierte Gruppe der Formel II

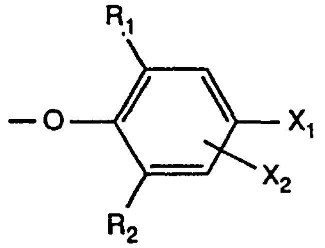

(II),

worin $R_1$, $R_2$, $X_1$ und $X_2$ die oben angegebene Bedeutung haben, sind oder $R_3$ und $R_4$ zusammen eine Gruppe der Formel III bilden

EP 0 456 605 A1

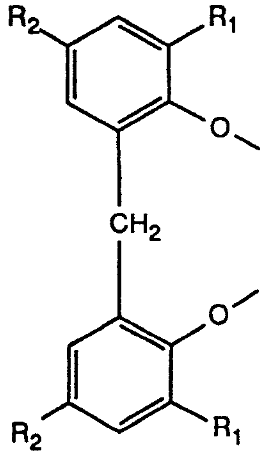

(III),

worin $R_1$ und $R_2$ die oben angegebene Bedeutung haben, eigen sich ausgezeichnet als Flammhemmer für Polymere.

Die vorliegende Erfindung betrifft neue Phosphorverbindungen, Polymere enthaltend diese Phosphorverbindungen sowie die Verwendung der Phosphorverbindungen als Flammhemmer für Polymere.

Die Flammwidrigkeit von Polymeren wird im allgemeinen verbessert durch Reduzierung des organischen Anteils; z.B. durch Zugabe von nicht respektive schwerbrennbaren Füllstoffen, wie z.B. Quarzmehl, Glas, Wollastonit, etc. Allerdings muss der Füllstoffanteil hoch gewählt werden, um einen ausreichenden Flammschutz zu bedingen, was zu unlösbaren Problemen bei der Herstellung und Verarbeitung der Reaktionsharzmassen führen kann.

Eine weitere Möglichkeit ist der Zusatz von Flammschutzmitteln zu den Polymeren. In Frage kommen anorganische Zusätze wie beispielsweise Borverbindungen oder Metallhydroxide. Auch hier sind grosse Anteile an solchen Zusätzen erforderlich, was sich ebenfalls nachteilig auf die Herstellung und Verarbeitung auswirkt.

Die Verwendung hoch-halogenierter Verbindungen, wie Tetrabrombisphenol-A, Decabromdiphenylether oder hochbromierter Polystyrole ist sehr umstritten, da die Entsorgung so ausgerüsteter Polymerer aus ökologischen Gründen in Frage gestellt ist. Bei der Verbrennung besteht die potentielle Gefahr der Bildung von stark toxischen (dioxinähnlichen) Produkten.

Aus der US Patentschrift 3,689,602 sind halogenierte Phosphorsäureester als flammhemmende Zusätze für Kunststoffe bekannt.

Der Einsatz von phosphor-organischen Verbindungen zur Flammhemmung, welche nicht in die Polymere eingebaut werden, bedingt einen Weichmachereffekt, was zu einer oft erheblichen Einbusse an mechanischen und elektrischen Eigenschaften der Polymere führt. So werden z.B. die Festigkeitswerte bzw. die Glasumwandlungstemperatur aufgrund der weichmachenden Wirkung der phosphororganischen Verbindung erniedrigt. Zudem sind diese Verbindungen meist hydrolyseinstabil, was zu einer unerwünschten Wasseraufnahme des Reaktionsharzformstoffes unter gleichzeitiger Bildung von verschiedenen Phosphorsäureverbindungen führt.

Aus der EP-A 265 196 sind halogenfreie sterisch gehinderte Phosphonate und Phosphate als Farbstabilisatoren für photographische Schichten bekannt.

Es wurde nun überraschend gefunden, dass durch neue sterisch gehinderte Phosphate respektive Thiophosphate mit einem geringen Halogenanteil die Erhöhung der Flammhemmung von Polymeren bewirken, ohne deren andere Eigenschaften, wie thermische Beständigkeit, mechanische Festigkeit, Dielektrizitätskonstante oder Wasseraufnahme, wesentlich zu beeinflussen. Die neuen Flammschutzmittel zeichnen sich durch ausgezeichnete Thermo- und Hydrolysestabilität aus.

Die vorliegende Erfindung betrifft Verbindungen der allgemeinen Formeln I

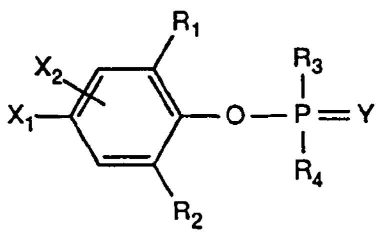

(I),

worin $X_1$ Chlor oder Brom bedeutet,
$X_2$ Chlor, Brom oder Wasserstoff ist, und
Y für O oder S, und
$R_1$ und $R_2$ unabhängig voneinander $C_1$-$C_4$-Alkyl bedeuten, und
$R_3$ und $R_4$ eine gleich oder verschieden substituierte Gruppe der Formel II

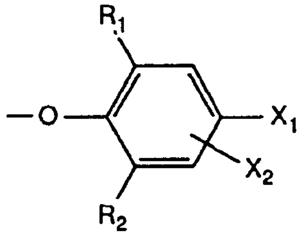

(II),

worin $R_1$, $R_2$, $X_1$ und $X_2$ die oben angegebene Bedeutung haben, oder $R_3$ und $R_4$ zusammen eine Gruppe der Formel III bilden

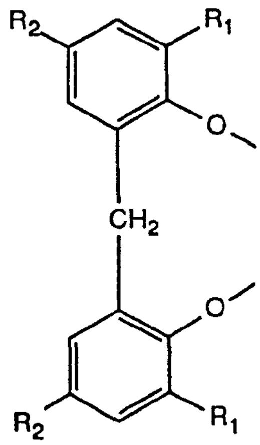

(III),

worin $R_1$ und $R_2$ die oben angegebene Bedeutung haben.

$X_1$ und $X_2$ bedeuten Chlor und vorzugsweise Brom. Die besonders bevorzugte Bedeutung von $X_2$ ist Wasserstoff.

Y kann O oder S bedeuten, bevorzugt handelt es sich um O.

$R_1$ und $R_2$ können als Alkylsubstituenten unabhängig voneinander beispielsweise Methyl, Ethyl, Isopropyl oder t.Butyl sein. $R_1$ bedeutet in den Formeln I und II vorzugsweise Methyl oder t.Butyl, in der Formel III t.Butyl. Die bevorzugte Bedeutung von $R_2$ ist Methyl.

In bevorzugten Verbindungen der Formel I stehen die Symbole $R_3$ und $R_4$ für eine Gruppe der Formel II. In besonders bevorzugten Verbindungen sind diese Gruppen identisch. Es handelt sich dabei um sogenannt symmetrische Phosphate.

Wegen ihres niedrigen Halogengehalts sind auch diejenigen Verbindungen von großem Interesse, in denen die Symbole $R_3$ und $R_4$ zusammen eine Gruppe der Formel III bilden. In dieser Formel sind $R_1$ bevorzugt t.Butyl und $R_2$ bevorzugt Methyl.

Die Herstellung der Verbindungen der Formel I erfolgt in an sich bekannter Weise.

Die Herstellung von Verbindungen der Formel I, worin Y O ist und die Reste $R_3$ und $R_4$ eine Gruppe der Formel II bedeuten, erfolgt beispielsweise durch Umsetzung mindestens eines Phenols der Formel IV

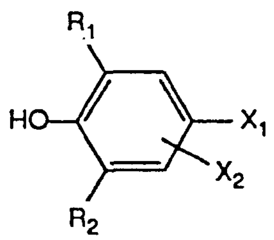

(IV),

worin $R_1$, $R_2$, $X_1$ und $X_2$ die oben angegebene Bedeutung haben mit $PCl_3$ im Gesamtverhältnis von ungefähr 3:1 in Gegenwart einer Base, wie Triethylamin oder Pyridin in einem inerten Lösungsmittel, wie z.B. Toluol. Das dabei entstehende Phosphit der Formel V

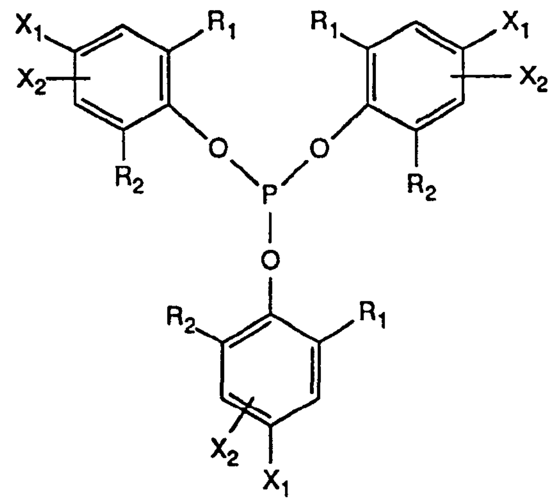

(V)

wird, falls die entsprechenden Phosphate mit Y = O hergestellt werden sollen, nach üblichen Methoden, z.B. mittels Peressigsäure und Wasserstoffperoxid zu den Phosphaten der Formel I oxidiert.

Die entsprechenden Thiophosphate mit Y = S erhält man auf bekannte Weise, indem man das Phosphit der Formel V mit elementarem Schwefel umsetzt (s. z.B. Houben-Weyl "Methoden der organischen Chemie", Band 12/2, S. 647).

Die Verbindungen der Formel I, worin Y O ist und $R_3$ und $R_4$ zusammen eine Gruppe der Formel III bilden, können auch auf bekannte Weise dargestellt werden (s. z.B. EP-A 265 196), indem man ein Bisphenol der Formel VI

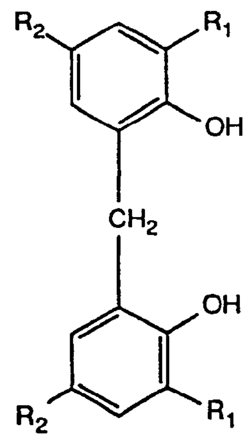

(VI),

worin $R_1$ und $R_2$ die oben angegebene Bedeutung haben mit einem Phosphorsäuredichlorid der Formel VII

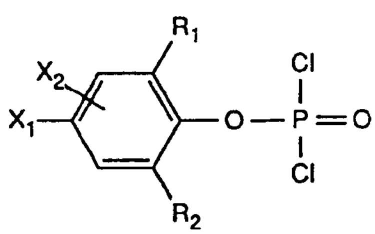

(VII),

in Gegenwart einer Base in einem inerten Lösungsmittel bei erhöhter Temperatur umsetzt.

Das Phosphorsäuredichlorid der Formel VII wird beispielsweise durch Umsetzung eines Phenols der Formel IV mit $POCl_3$ hergestellt.

Die Phenole der Formel IV werden auf bekannte Weise aus den entsprechenden nichthalogenierten Phenolen mit elementarem Halogen, z.B. durch Zutropfen von elementarem Brom in eine Lösung des Phenols in einem inerten Lösungsmittel, z.B. Toluol, hergestellt.

Sollen Verbindungen der Formel I hergestellt werden, worin X S ist und $R_3$ und $R_4$ zusammen eine Gruppe der Formel III bilden, so wird zweckmässigerweise ein Bisphenol der Formel VI mit $PCl_3$ umgesetzt. Das so erhaltene Phosphorigsäurechlorid wird anschliessend mit einem Phenol der Formel IV zum entsprechenden Phosphit umgesetzt, welches wie oben beschrieben mit elementarem Schwefel zu den entsprechenden Thiophosphaten der Formel I umgesetzt wird.

Die Verbindungen der Formel I sind als flammhemmende Substanzen für Polymere, insbesondere für Epoxidharze geeignet.

Die Menge der den Polymeren als Flammhemmer zuzusetzenden Verbindungen der Formel I kann innerhalb weiter Grenzen variieren. Im allgemeinen verwendet man 0,1 bis 100 Gewichtsteile, bezogen auf 100 Teile des Polymeren. Bevorzugt verwendet man 0,5 bis 30 Gewichtsteile und besonders bevorzugt 2 bis 20 Gewichtsteile der Verbindungen der Formel I, bezogen auf 100 Gewichtsteile des Polymeren. Die optimale Menge hängt von der Natur des Polymeren und der Art der eingesetzten Verbindung der Formel I ab und kann leicht durch Versuche ermittelt werden.

Da die Verbindungen der Formel I im allgemeinen schon bei geringen Zusatzmengen wirksam und zudem halogenarm sind, verursachen sie im Polymeren gegenüber anderen bekannten Flammhemmern weniger unerwünschte Effekte.

Die Verbindungen der Formel I können je nach Art des verwendeten Polymeren und den gewünschten Eigenschaften in verschiedener physikalischer Form angewendet werden. So können sie z.B. zum Erzielen einer besseren Dispersion im Polymeren zu einer feinteiligen Form vermahlen werden. Falls erwünscht können auch Gemische verschiedener Verbindungen der Formel I eingesetzt werden.

Die Verbindungen der Formel I können in verschiedenen Polymeren angewendet werden Geeignete Polymere, die damit flammfest gemacht werden können, sind z.B.

1. Polyphenylenoxide und -sulfide sowie Gemische dieser Polymeren mit Polystyrolpfropfpolymeren oder Styrolcopolymeren, wie z.B. hoch schlagfestes Polystyrol, und EPDM-Copolymere mit Kautschuken, sowie Gemische von Polyphenylenoxiden mit Polyamiden und Polyestern.

2. Polyurethane, die sich von Polyethern, Polyestern oder Polybutadien mit endständigen Hydroxylgruppen einerseits und aliphatischen oder aromatischen Polyisocyanaten andererseits ableiten, einschliesslich Polyisocyanurate und Vorläufer davon.

3. Polyamide und Copolyamide, die sich von Diaminen und Dicarbonsäuren und/oder von Aminocarbonsäuren oder den entsprechenden Lactamen ableiten, wie Polamid 4, Polyamid 6, Polyamid 6/6, Polyamid 6/10, Polyamid 11, Polyamid 12, Poly-2,4,4-trimethylhexamethylenterephthalamid oder Poly-m-phenylenisophthalamid sowie Copolymere davon mit Polyethern, wie z.B. mit Polyethylenglykolen, Polypropylenglykolen oder Polytetramethylenglykolen.

4. Polyester, die sich von Dicarbonsäuren und Dialkoholen und/oder Hydroxycarbonsäuren oder den entsprechenden Lactonen ableiten, wie z.B. Polyethylenterephthalat, Polybutylenterephthalat, Poly-1,4-dimethylol-cyclohexan-terephthalat und Polyhydroxybenzoate sowie Block-Copolyether-ester, die sich von Polyethern mit endständigen Hydroxylgruppen ableiten.

5. Ungesättigte Polyester die sich von Copolyestern aus gesättigten und ungesättigten Dicarbonsäuren und mehrwertigen Alkoholen und Vinylverbindungen als Vernetzungsmittel ableiten.

6. Polystyrol.

7. Pfropfcopolymere von Styrol, wie z.B. Styrol auf Polybutadien, Styrol und Acrylnitril auf Polybutadien, Styrol und Alkylacrylate oder -methacrylate auf Polybutadien, Styrol und Acrylnitril auf Ethylen/Propylen/Dien-Terpolymere, Styrol und Acrylnitril auf Acrylat/Butadien-Copolymere, sowie Gemische davon mit statistischen Copolymeren aus Styrol oder a-Methylstyrol und Dienen oder Acrylsäurederivaten, wie z.B. die als ABS, MBS, ASA oder AES bekannten Styrol-Terpolymere.

8. Vernetzte Epoxidharze, die sich von Polyepoxiden ableiten, wie z.B. von Bis-diglycidylethern, besonders Bisphenol-A-diglycidylethern, oder von cycloaliphatischen Diepoxiden.

9. Polycarbonate.

Insbesondere geeignet sind die Verbindungen der Formel I zur Flammfest-Ausrüstung von vernetzten Epoxidharzen.

Daher betrifft die vorliegende Erfindung auch Zusammensetzungen enthaltend ein Polymer und mindestens eine Verbindung der Formel I.

Die erfindungsgemässen Zusammensetzungen können auch weitere übliche Zusätze enthalten, wie z.B. Hitzestabilisatoren, Lichtstabilisatoren, UV-Absorber, Antioxidantien, antistatische Mittel, Konservierungsmittel, Haftvermittler, Füllstoffe, Pigmente, Schmierstoffe, Verschäumungsmittel, Fungizide, Weichmacher, Verarbeitungshilfsmittel, weitere flammhemmende Zusätze und Mittel zum Verringern der Rauchentwicklung.

Als zusätzliche Flammhemmer, die zusammen mit den erfindungsgemäss verwendeten Verbindungen der Formel I eingesetzt werden können, kommen z.B. phosphorhaltige Salze, wie z.B. Ammoniumpolyphosphate,

Antimontrioxid, Aluminiumhydroxid, Wismutoxid, Molybdänoxid oder Gemische dieser Verbindungen mit Zink- und/oder Magnesiumoxid oder -salzen, in Betracht.

Die Erfindung wird durch die folgenden Beispiele näher erläutert.

Beispiel 1:

244,4 g (2,0 Mol) 2,6-Dimethylphenol werden in 600 ml Toluol vorgelegt. Im Verlauf von 45 Minuten werden zu dieser Lösung 329,2 g (2,06 Mol) Brom bei 20°C unter Rühren zugetropft. Nach weiteren 5 Minuten bei Raumtemperatur werden 5 ml Pyridin und während 10 Minuten 91,6 g (0,666 Mol) Phosphortrichlorid zugegeben. Nach langsamem Aufwärmen innerhalb einer Stunde bis zur Rückflusstemperatur wird die Reaktionsmischung unter Freisetzung von HCl und HBr (Neutralisation in Waschanlage) während 2,5 Stunden bei dieser Temperatur gehalten.

Noch immer bei Rückflusstemperatur werden innerhalb von 5 Minuten 70 ml Triethylamin zugetropft und die Reaktionsmischung nach 15 Minuten auf 15°C abgekühlt.

Die Oxidation erfolgt bei Raumtemperatur durch Zugabe von 200 ml Essigsäure während 15 Minuten und anschliessend bei 15-20°C durch Zutropfen von 90,4 ml Wasserstoffperoxid (30 %) während 1 Stunde 45 Minuten. Das Reaktionsgemisch wird während 2 Stunden bei Raumtemperatur stark gerührt, 600 ml Wasser zugegeben und das Toluol mittels Wasserdampfdestillation abdestilliert. Danach wird bei Raumtemperatur filtriert und das so erhaltene Produkt mit Wasser und danach mit Methanol gewaschen. Die bei 80°C im Vakuum getrockneten farblosen Kristalle besitzen einen Schmelzpunkt von 170°C, Ausbeute: 424 g (98 % der Theorie).

Das erhaltene Produkt ist Tris-(4-bromo-2,6-dimethylphenyl)-phosphat.

Beispiel 2:

24,43 g (0,2 Mol) 2,6-Dimethylphenol in 200 ml Toluol werden mit 32,0 g (0,2 Mol) Brom während 45 Minuten unter Rühren versetzt. Nach weiteren 10 Minuten Rühren werden 68,1 g (0,2 Mol) 2,2'-Methylen-bis-(4-methyl-6-t.butylphenol) und 2 ml Pyridin zugegeben. Innerhalb von 10 Minuten werden 27,5 g (0,2 Mol) Phosphortrichlorid zugetropft. Das Reaktionsgemisch wird nun langsam während einer Stunde auf die Rückflusstemperatur gebracht, dort unter Rühren während 2 Stunden gehalten und langsam 25 ml Triethylamin zugetropft. Nach 20 Minuten wird auf 15°C abgekühlt. Die Oxidation mittels 70 ml Essigsäure und 30,2 ml (0,27 Mol) Wasserstoffperoxid (30 %) und die Aufarbeitung erfolgt analog Beispiel 1. Es werden 110 g (94 % der Theorie) eines farblosen Pulvers mit einem Schmelzpunkt von 240°C erhalten. Das Produkt entspricht der Formel:

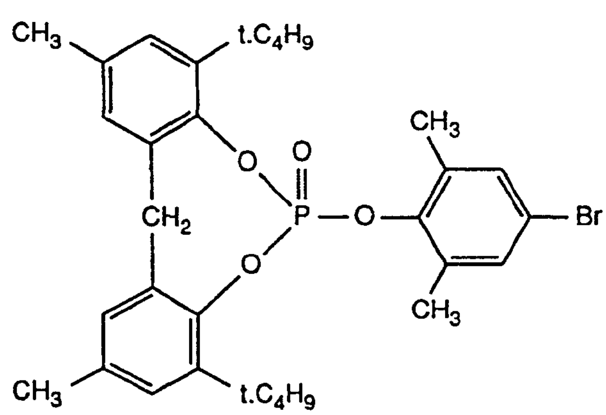

Beispiel 3:

Analog zu Beispiel 1 werden 48 g (93 % der Theorie) eines farblosen Pulvers mit einem Schmelzpunkt von 173°C erhalten. Anstelle von 2,6-Dimethylphenol wird 2-t.Butyl-6-methylphenol eingesetzt. Das so erhaltene Produkt ist Tris-(4-bromo-2-t.butyl-6-methylphenyl)phosphat.

Beispiel 4:

Es werden aus dem folgenden Epoxidharz unter Zusatz der Flammhemmer der Beispiele 1 bis 3 Prüfkörper (2 mm-Platten) hergestellt.

100 Gew.-Teile Bisphenol-A-diglycidylether (Epoxidgehalt 5,6 Aeq./kg)
10 Gew.-Teile eines Gemischs aus 25 Gew.-Teilen Dicyandiamid und 75 Gew.-Teilen oligomerem Cyanoguanidin (gemäss EP-A 306 451, Bsp. 3)
0,3 Gew.-Teile 2-Methyl-imidazol
15 Gew.-Teile Flammhemmer.

Die Prüfkörper werden 1 h bei 160°C und 2 h bei 180°C gehärtet, worauf ein gelbliches, klares Epoxidharz erhalten wird.

Nach der Entformung werden die Prüfkörper auf ihre Brennbarkeit nach der Norm von Underwriters Laboratories Inc. UL 94, dritte Ausgabe (Revision) vom 25. Sept. 1981 (Horizontale Brennbarkeitsprüfung) geprüft.

Weiter wird die Glasübergangstemperatur mit Hilfe der DSC-Methode (Differential Scanning Calorimetry) ermittelt, sowie die Kochwasseraufnahme bestimmt.

Ebenso wird eine Thermogravimetrie durchgeführt, wobei die Temperatur bestimmt wird, bei der der Prüfkörper einen Gewichtsverlust von 5 respektive 10 Gew.-% aufweist.

Die Resultate sind in Tabelle 1 wiedergegeben.

Tabelle 1

| Flammhemmer gemäss Beispiel | - | 1 | 2 | 3 |
|---|---|---|---|---|
| Flammhemmung nach UL an 2 mm | brennt | V-O | V-O | V-O |
| Glasumwandlungstemperatur (DSC) [°C] | 150 | 142 | 144 | 140 |
| Kochwasseraufnahme (2 mm/1 h) [Gew.-%] | 0,39 | 0,33 | 0,30 | 0,29 |
| Thermogravimetrie | | | | |
| t (-5 Gew.-%) [°C] | 325 | 300 | 290 | 305 |
| t (-10 Gew.-%) [°C] | 345 | 315 | 305 | 320 |

## Patentansprüche

1. Verbindungen der allgemeinen Formeln I

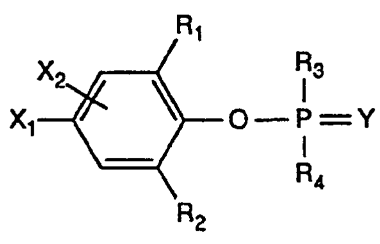

(I),

worin $X_1$ Chlor oder Brom bedeutet,
$X_2$ Chlor, Brom oder Wasserstoff ist, und
Y für O oder S, und
$R_1$ und $R_2$ unabhängig voneinander $C_1$-$C_4$-Alkyl bedeuten, und
$R_3$ und $R_4$ eine gleich oder verschieden substituierte Gruppe der Formel II

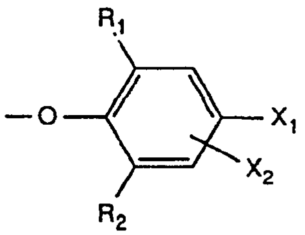

(II),

worin $R_1$, $R_2$, $X_1$ und $X_2$ die oben angegebene Bedeutung haben, sind oder $R_3$ und $R_4$ zusammen eine Gruppe der Formel III bilden

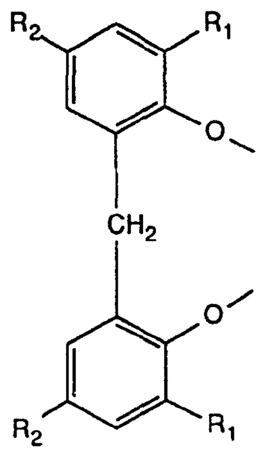

(III),

worin $R_1$ und $R_2$ die oben angegebene Bedeutung haben.

2. Verbindungen gemäss Anspruch 1, wobei $X_1$ Brom ist.

3. Verbindungen gemäss Anspruch 1, wobei $X_2$ Wasserstoff ist.

4. Verbindungen gemäss Anspruch 1, wobei Y Sauerstoff ist.

5. Verbindungen gemäss Anspruch 1, wobei $R_1$ und $R_2$ unabhängig voneinander Methyl, Ethyl, Isopropyl oder t.Butyl sind.

6. Verbindungen gemäss Anspruch 1, wobei $R_1$ in den Formeln I und II Methyl oder t.Butyl bedeutet.

7. Verbindungen gemäss Anspruch 1, wobei $R_1$ in der Formel III t.Butyl bedeutet.

8. Verbindungen gemäss Anspruch 1, wobei $R_2$ Methyl bedeutet.

9. Verbindungen gemäss Anspruch 1, wobei $R_3$ und $R_4$ je eine gleich oder verschieden substituierte Gruppe der Formel II bedeuten.

10. Verbindungen gemäss Anspruch 1, wobei $R_3$ und $R_4$ zusammen eine Gruppe der Formel III bilden.

11. Zusammensetzungen enthaltend ein Polymer und mindestens eine Verbindung der Formel I nach Anspruch 1.

12. Zusammensetzungen gemäss Anspruch 11, enthaltend 0,1 bis 10 Gewichtsteile der Verbindungen der Formel I, bezogen auf 100 Gewichtsteile Polymer.

13. Zusammensetzungen gemäss Anspruch 11, enthaltend ein Epoxidharz.

14. Verwendung der Verbindungen der Formel I nach Anspruch 1 als Flammhemmer für Polymere.

Europäisches Patentamt

# EUROPÄISCHER RECHERCHENBERICHT

Nummer der Anmeldung

EP 91 81 0326

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 371 455 (BAYER AG)<br>* Insgesamt *<br>--- | 1,11,14 | C 07 F 9/6571<br>C 08 K 5/5398<br>C 08 K 5/523<br>C 08 K 5/527<br>C 07 F 9/6574<br>C 07 F 9/12<br>C 07 F 9/165 |
| A | FR-A-2 431 504 (CIBA-GEIGY)<br>* Insgesamt *<br>--- | 1 | |
| A | GB-A-1 512 165 (CIBA-GEIGY)<br>* Insgesamt *<br>--- | 1 | |
| A | EP-A-0 054 518 (CIBA-GEIGY)<br>* Insgesamt *<br>----- | 1 | |
| | | | RECHERCHIERTE SACHGEBIETE (Int. Cl.5) |
| | | | C 07 F 9/00<br>C 08 K 5/00 |

Der vorliegende Recherchenbericht wurde für alle Patentansprüche erstellt

| Recherchenort | Abschlußdatum der Recherche | Prüfer |
|---|---|---|
| DEN HAAG | 19-08-1991 | OUSSET J-B. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)